# EUROPEAN PATENT APPLICATION

(11) **EP 3 279 834 A1**
(43) Date of publication of application: **07.02.2018**
(21) Application number: 16772822.9
(22) Date of filing: 29.03.2016
(51) Int. Cl.: G06K 13/06

(54) **CARD PROCESSING DEVICE**

(30) Priority: 30.03.2015 JP 2015067984
(71) Applicant: Nidec Sankyo Corporation, Suwa-gun, Nagano 393-8511 (JP)
(72) Inventor: KURIBAYASHI, Ikuro, Suwa-gun Nagano 393-8511 (JP)
(74) Representative: Becker Kurig Straus
(86) International application number: PCT/JP2016/060105
(87) International publication number: WO 2016/158941

(57) **Abstract**

Provided is a card processing device capable of giving to a user a favorable feeling that a card has been completely inserted. The card processing device may include a moving part 17 that moves between an insertable and ejectable position 17A where a presser member 16 is disposed on an upper side relative to a card 2 to be inserted through a card insertion port 3 and the card 2 is insertable into and ejectable from the card processing device and an insertion completion position where the presser member 16 is contactable with an upper face of the card 2 to press the upper face of the card 2 and which is located on a lower side relative to the insertable and ejectable position 17A, and a holding member 18 that slides between a hold position 18A where the holding member 18 holds the moving part 17 located at the insertable and ejectable position 17A and a retreated position where the holding member 18 is retreated so that the moving part 17 moves to the insertion completion position. In the card processing device, when the card 2 which has been inserted through the card insertion port 3 and has been abutted with an abutting member 19 is further inserted, the holding member 18 slides from the hold position 18A to the retreated position, and the moving part 17 moves from the insertable and ejectable position 17A to the insertion completion position.

## Description

### TECHNICAL FIELD

At least an embodiment of the present invention relates to a card processing device structured to perform reading of data recorded in a card and recording of data to the card.

### BACKGROUND ART

Conventionally, a manually operated type card reader has been known, which is structured to perform reading of data recorded in a card and recording of data to the card (see, for example, Patent Literature 1). A card reader described in Patent Literature 1 is a so-called dip-type card reader structured to perform reading of data recorded in a card and recording of data to the card in such a manner that a user manually inserts the card into the card reader and manually pulls out the card from the card reader. The card reader includes a magnetic head and an IC contact block. In the card reader, the magnetic head performs reading and recording of magnetic data in inserting or pulling out a card into or from the card reader. Also in the card reader, the IC contact block performs reading and recording of data with a card inserted to a rear end of the card reader.

### CITATION LIST

### PATENT LITERATURE

Patent Literature 1: Japanese Patent Laid-Open No. 2011-113209

### SUMMARY

### TECHNICAL PROBLEM

In order to ensure a high degree of ease of use for users, card processing devices, including the card reader described in Patent Literature 1, preferably give to users a card insertion completion feeling that a card has been completely inserted into a card processing device (i.e., a feeling of a click). In view of the problem described above, at least an embodiment of the present invention provides a card processing device capable of giving to a user a favorable feeling that a card has been completely inserted.

### SOLUTIONS TO PROBLEM

To achieve the above, at least an embodiment of the present invention provides a card processing device provided with a card insertion port through which a card is inserted into and ejected from the card processing device, wherein one side in a thickness direction of the card inserted through the card insertion port is referred to as a first direction, and the other side in the thickness direction of the card is referred to as a second direction, the card processing device including: a moving part that includes a support member disposed on a first direction side of the card inserted through the card insertion port and structured to be contactable with the card from the first direction side, and a presser member structured to press a second direction-side face of the card inserted through the card insertion port, wherein the moving part being movable in the thickness direction of the card between an insertable and ejectable position and an insertion completion position, and the insertable and ejectable position is where the presser member is disposed on a second direction side relative to the card inserted through the card insertion port so that the card becomes insertable into and ejectable from the card insertion port, and the insertion completion position is where the presser member is contactable with the second direction-side face of the card to press the second direction-side face of the card and which is located on the first direction side relative to the insertable and ejectable position; a holding member that is slidable in an inserting direction of the card and an ejecting direction of the card between a hold position where the holding member holds the moving part located at the insertable and ejectable position and a retreated position where the holding member is retreated so that the moving part becomes movable to the insertion completion position; an abutting member with which a tip end of the card inserted through the card insertion port is abutted; a first urging member that urges the abutting member in the ejecting direction of the card; a second urging member that urges the moving part in the first direction; and a drive source that moves the moving part from the insertion completion position to the insertable and ejectable position. In inserting the card, when the card which has been inserted through the card insertion port and has been abutted with the abutting member is further inserted, the holding member slides from the hold position to the retreated position, and the moving part moves from the insertable and ejectable position to the insertion completion position, and in ejecting the card, the moving part moves from the insertion completion position to the insertable and ejectable position by power of the drive source, and the abutting member pushes the card in the ejecting direction of the card, so that the card is ejected from the card insertion port.

The card processing device according to at least an embodiment of the present invention includes the moving part that is movable in the thickness direction of the card between the insertable and ejectable position where the presser member is disposed on the second direction side relative to the card inserted through the card insertion port so that the card becomes insertable into and ejectable from the card insertion port and the insertion completion position where the presser member is contactable with the second direction-side face of the card to press the second direction-side face of the card and which is located on the first direction side relative to the insertable and ejectable position, and the holding member that is slidable in the inserting direction of the card and the ejecting direction of the card between the hold position where the holding member holds the moving part located at the insertable and ejectable position and the retreated position where the holding member is retreated so that the moving part becomes movable to the insertion completion position. In at least an embodiment of the present invention, further, when the card which has been inserted through the card insertion port and has been abutted with the abutting member is further inserted, the holding member slides from the hold position to the retreated position, and the moving part moves from the insertable and ejectable position to the insertion completion position. In other words, in at least an embodiment of the present invention, when the card which has been inserted through the card insertion port and has been abutted with the abutting member is further inserted, the moving part moves to the insertion completion position located on the first direction side relative to the insertable and ejectable position, and the presser member presses the second direction-side face of the card. According to at least an embodiment of the present invention, therefore, a favorable feeling that a card has been completely inserted can be given to a user.

The card processing device according to at least an embodiment of the present invention also includes the drive source that moves the moving part from the insertion completion position to the insertable and ejectable position. In ejecting the card, the moving part moves from the insertion completion position to the insertable and ejectable position by the power of the drive source, and the abutting member pushes the card in the ejecting direction of the card, so that the card is ejected from the card insertion port. According to at least an embodiment of the present invention, the card can be automatically ejected even when the moving part moves to the insertion completion position located on the first direction side relative to the insertable and ejectable position in inserting the card, in order to give to a user a favorable feeling that a card has been completely inserted.

In at least an embodiment of the present invention, preferably, the abutting member is fixed to the holding member or is formed integrally with the holding member, and in inserting the card, when the card which has been inserted through the card insertion port and has been abutted with the abutting member is further inserted, the holding member moves together with the abutting member in the inserting direction of the card and slides to the retreated position. According to this structure, the structure of the card processing device can be relatively simplified.

In at least an embodiment of the present invention, for example, the support member has a first protruded part that is protruded in the first direction, the holding member has a second protruded part that is protruded in the second direction and is abutted with a first direction-side end of the first protruded part at the hold position, and in inserting the card, when the card which has been inserted through the card insertion port and has been abutted with the abutting member is further inserted, the holding member moves in the inserting direction of the card to release an abutment state of the second protruded part with the first protruded part, so that the moving part moves from the insertable and ejectable position to the insertion completion position.

In at least an embodiment of the present invention, preferably, the drive source is coupled to the moving part to move the moving part in the second direction. According to this structure, since the moving part is directly moved in the second direction by the drive source, the moving part can be surely moved in the second direction.

In at least an embodiment of the present invention, the card processing device may further include a lock member that locks the holding member at the hold position, and a third urging member that urges the holding member in the ejecting direction of the card, the abutting member may be fixed to the lock member or may be formed integrally with the lock member, the first urging member may urge the lock member toward a lock position where the lock member locks the holding member, and in inserting the card, when the card which has been inserted through the card insertion port and has been abutted with the abutting member is further inserted, a locked state of the holding member by the lock member is released, so that the holding member may move in the ejecting direction of the card and may slide to the retreated position.

In this case, for example, the support member has a first protruded part that is protruded in the first direction, the holding member has a second protruded part that is protruded in the second direction and is abutted with a first direction-side end of the first protruded part at the hold position, and in inserting the card, when the card which has been inserted through the card insertion port and has been abutted with the abutting member is further inserted, the locked state of the holding member by the lock member is released, so that the holding member moves in the ejecting direction of the card, and an abutment state of the second protruded part with the first protruded part is released, so that the moving part moves from the insertable and ejectable position to the insertion completion position.

Also in this case, for example, the first protruded part has a face on an ejecting direction side of the card, the face being an inclined face that is inclined to the inserting direction of the card toward the first direction side, and the drive source is coupled to the holding member to slide the holding member in the inserting direction of the card.

In at least an embodiment of the present invention, preferably, the card processing device further includes a magnetic head that performs at least one of reading of magnetic data recorded in the card and recording of magnetic data to the card, the card is formed in a substantially rectangular shape, the card has a magnetic stripe to which magnetic data are recorded and which is formed in a strip shape along a longitudinal direction of the card, and the card is inserted into the card insertion port so that a short widthwise direction of the card and the inserting direction of the card are coincided with each other. According to this structure, it is possible to prevent so-called skimming that a criminal attaches a magnetic head to the card insertion port of the card processing device to illegally acquire magnetic data in the card with this magnetic head.

In at least an embodiment of the present invention, preferably, the card processing device further includes a card insertion part that has the card insertion port and includes the moving part, the holding member, and the abutting member, and a main body part that includes the magnetic head, the card insertion part and the main body part are disposed so as to be adjacent to each other in a perpendicular direction being perpendicular to the thickness direction of the card and the inserting direction of the card, the main body part includes a card conveying mechanism that conveys the card in an inside of the main body part, the card insertion part includes a first roller that is contacted with a first direction-side face of the card when the moving part is located at the insertion completion position, the presser member is a second roller that is contacted with the second direction-side face of the card when the moving part is located at the insertion completion position, and the card is conveyed in the perpendicular direction between the card insertion part and the main body part by the card conveying mechanism, the first roller, and the second roller. According to this structure, reading and recording of magnetic data using the magnetic head can be performed even when the card processing device is not provided with a head moving mechanism structured to move the magnetic head in the perpendicular direction. Accordingly, the structure of the card processing device can be simplified.

### ADVANTAGEOUS EFFECT OF INVENTION

As described above, a card processing device according to at least an embodiment of the present invention is capable of giving to a user a favorable feeling that a card has been completely inserted.

### BRIEF DESCRIPTION OF DRAWINGS

FIG. 1 is a schematic plan view of a card processing device in accordance with an embodiment of the present invention.
FIG. 2(A) is a front view of a card insertion part shown in FIG. 1, and FIG. 2(B) is a plan view of the card insertion part shown in FIG. 1.
FIG. 3 is an explanatory front view showing an operation of the card insertion part shown in FIG. 1.
FIG. 4 is an explanatory front view showing an operation of the card insertion part shown in FIG. 1.
FIG. 5 shows a card insertion part in accordance with another embodiment of the present invention, wherein (A) is a front view, and (B) is a plan view.
FIG. 6 shows an operation of the card insertion part shown in FIG. 5, wherein (A) is an explanatory front view, and (B) is an explanatory plan view.
FIG. 7 shows an operation of the card insertion part shown in FIG. 5, wherein (A) is an explanatory front view, and (B) is an explanatory plan view.
FIG. 8 shows an operation of the card insertion part shown in FIG. 5, wherein (A) is an explanatory front view, and (B) is an explanatory plan view.

### DESCRIPTION OF EMBODIMENTS

Embodiments of the present invention will be described below with reference to the drawings.

### (Schematic Structure of Card Processing Device)

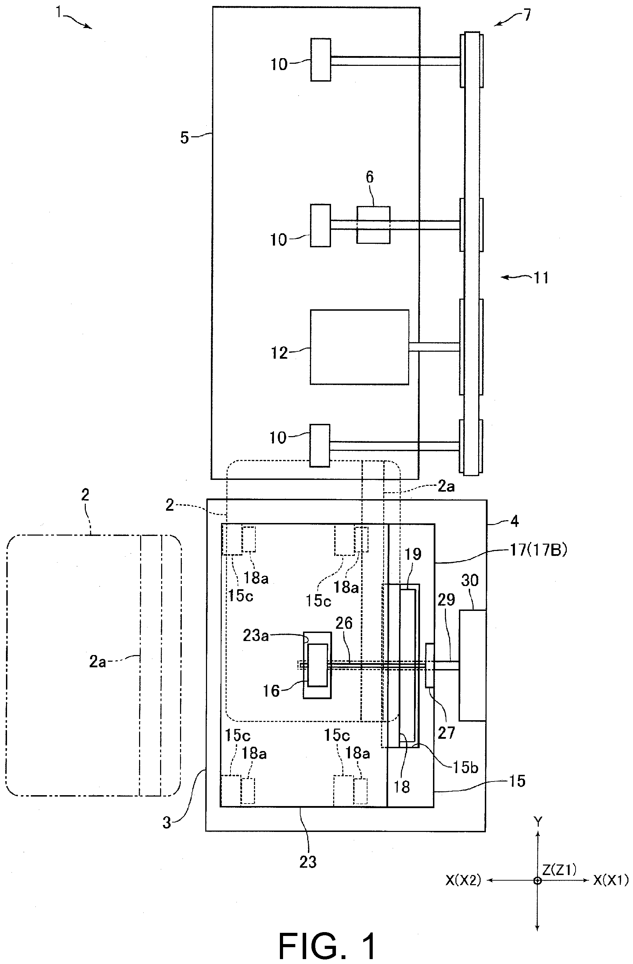

FIG. 1 is a schematic plan view of a card processing device 1 in accordance with an embodiment of the present invention.

The card processing device 1 in this embodiment is a device for performing reading of data recorded in a card 2 and recording of data to the card 2 and is mounted for use on a predetermined host apparatus such as an automated teller machine (ATM). The card processing device 1 includes a card insertion part 4 having a card insertion port 3 into and from which the card 2 is inserted and ejected, and a main body part 5. The card processing device 1 also includes a magnetic head 6 disposed in an inside of the main body part 5 and structured to perform at least one of reading of magnetic data recorded in the card 2 and recording of magnetic data to the card 2. The main body part 5 includes a card conveying mechanism 7 that conveys the card 2 in the inside of the main body part 5.

In this embodiment, the card 2 is inserted into and ejected from the card insertion port 3 in an "X" direction shown in FIG. 1. Specifically, the card 2 is inserted in an "XI" direction and is ejected in an "X2" direction. In other words, the "XI" direction is an inserting direction of the card 2, and the "X2" direction is an ejecting direction of the card 2. Further, a "Z" direction in FIG. 1 perpendicular to the "X" direction is a thickness direction of the card 2 that is inserted into the card insertion port 3 and is taken into the card processing device 1. Further, the card 2 is conveyed in a "Y" direction in FIG. 1 perpendicular to the "X" direction and the "Z" direction in an inside of the card processing device 1.

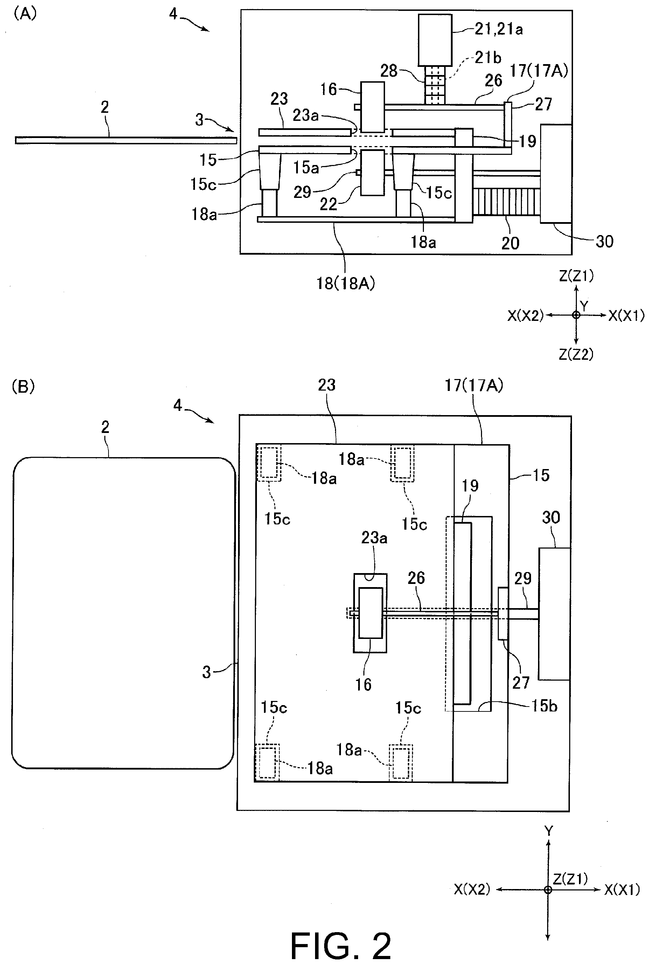

In the following descriptions, the "X" direction is referred to as a "right and left direction", the "Y" direction is referred to as a "front and rear direction", and the "Z" direction is referred to as an "upper and lower direction". Further, an "XI" direction side is referred to as a "right" side, and an "X2" direction side is referred to as a "left" side. As shown in FIG. 2(A), a "Zl" direction side is referred to as an "upper" side, and a "Z2" direction side is referred to as a "lower" side. In this embodiment, the card processing device 1 is mounted so that the "Z" direction (upper and lower direction) is coincided with a vertical direction (direction of gravity). Also in this embodiment, a lower direction ("Z2" direction) is a first direction which is one side in the thickness direction of the card 2 inserted into the card insertion port 3, and an upper direction ("Zl" direction) is a second direction which is the other side in the thickness direction of the card 2. Also in this embodiment, the "Y" direction (front and rear direction) is a perpendicular direction that is perpendicular to the thickness direction of the card 2 and the inserting direction of the card 2.

The card 2 is, for example, a substantially rectangular-shaped card made of vinyl chloride whose thickness is about 0.7-0.8 mm. A rear face of the card 2 is formed with a magnetic stripe 2a which has a strip shape and to which magnetic data are recorded. The magnetic stripe 2a is formed along a longitudinal direction of the card 2 formed in a substantially rectangular shape. The card 2 is inserted into the card insertion port 3 so that a short widthwise direction of the card 2 and the right and left direction are coincided with each other. Further, in the inside of the card processing device 1, the card 2 is conveyed in the front and rear direction with the longitudinal direction of the card 2 and the front and rear direction coincided with each other. An IC chip and a communication antenna may be incorporated into the card 2. The card 2 may also be a PET (polyethylene terephthalate) card whose thickness is about 0.18-0.36 mm and may be a paper card having a predetermined thickness.

The card insertion port 3 is formed in a left side face of the card insertion part 4. The card insertion part 4 and the main body part 5 are disposed so as to be adjacent to each other in the front and rear direction. A width of the card insertion part 4 and a width of the main body part 5 in the right and left direction are wider than a width in the short widthwise direction of the card 2, but are narrower than a width in the longitudinal direction of the card 2. A specific structure and operations of the card insertion part 4 will be described later.

The magnetic head 6 is located at a position where the magnetic head 6 is abutted with the magnetic stripe 2a of the card 2 conveyed by the card conveying mechanism 7. The card conveying mechanism 7 includes a plurality of conveying roller pairs 10 for conveying the card 2. Each conveying roller pair 10 is structured of a drive roller that is coupled to a motor 12 via a power transmission mechanism 11 including pulleys, a belt, and the like, and a pad roller that is oppositely disposed to the drive roller. The drive roller and the pad roller face each other in the upper and lower direction. Further, the conveying roller pairs 10 are arranged in a predetermined pitch in the front and rear direction.

### (Structure and Operations of Card Insertion Part)

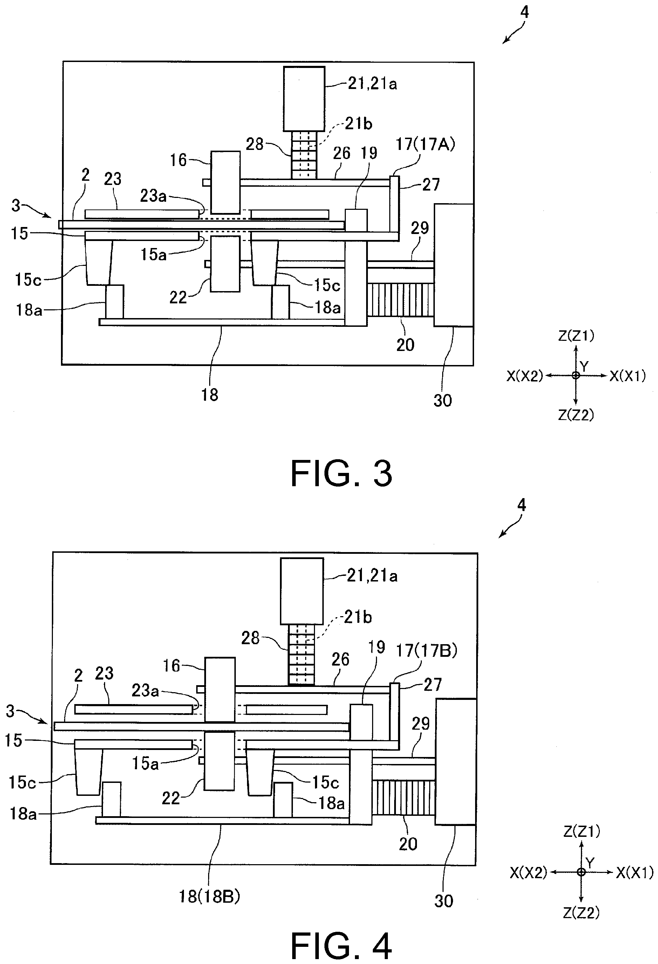

FIG. 2(A) is a front view of the card insertion part 4 shown in FIG. 1, and FIG. 2(B) is a plan view of the card insertion part 4 shown in FIG. 1. FIGS. 3 and 4 are explanatory front views each showing an operation of the card insertion part 4 shown in FIG. 1.

The card insertion part 4 includes a moving part 17 that includes a support member 15 disposed on the lower side relative to the card 2 inserted through the card insertion port 3 and structured to be contactable with the card 2 from the lower side, and a presser roller 16 structured to press an upper face of the card 2 inserted through the card insertion port 3. The moving part 17 is movable in the upper and lower direction between an insertable and ejectable position 17A (a position shown in FIGS. 2(A) and 3) and an insertion completion position 17B (a position shown in FIG. 4). The insertable and ejectable position 17A is where the presser roller 16 is disposed on the upper side relative to the card 2 inserted through the card insertion port 3 so that the card 2 becomes insertable into and ejectable from the card insertion port 3. The insertion completion position 17B is where the presser roller 16 is contactable with the upper face of the card 2 to press the upper face of the card 2 and which is located on the lower side relative to the insertable and ejectable position 17A. The presser roller 16 in this embodiment is a presser member. The presser roller 16 in this embodiment is also a second roller that is contacted with the upper face of the card 2 when the moving part 17 is located at the insertion completion position 17B.

The card insertion part 4 also includes: a holding member 18 that is slidable in the right and left direction between a hold position 18A (a position shown in FIG. 2(A)) where the holding member 18 holds the moving part 17 located at the insertable and ejectable position 17A and a retreated position 18B (a position shown in FIG. 4) where the holding member 18 is retreated so that the moving part 17 becomes movable to the insertion completion position 17B; an abutting member 19 with which a tip end (right end) of the card 2 inserted through the card insertion port 3 is abutted; an urging member 20 that urges the abutting member 19 in the left direction; a drive source 21 that moves the moving part 17 from the insertion completion position 17B to the insertable and ejectable position 17A; and a drive roller 22 that is contacted with a lower face of the card 2 when the moving part 17 is located at the insertion completion position 17B. The urging member 20 in this embodiment is a first urging member. The drive roller 22 in this embodiment is a first roller. It should be noted that the urging member 20, the drive source 21, and the like are not shown in FIG. 2(B).

The support member 15 is formed in a substantially rectangular flat plate shape. The support member 15 is disposed so that a thickness direction of the support member 15 and the upper and lower direction are coincided with each other. A guide member 23 formed in a flat plate shape is disposed on an upper side of the support member 15. The guide member 23 is formed in, for example, a substantially rectangular flat plate shape. The guide member 23 is disposed so that a thickness direction of the guide member 23 and the upper and lower direction are coincided with each other. A clearance that is wider than the thickness of the card 2 is formed between the support member 15 and the guide member 23 in the upper and lower direction. The clearance serves as a card conveying passage where the card 2 is conveyed.

A through-hole 15a is formed at a substantially center of the support member 15 so as to penetrate through the support member 15 in the upper and lower direction. A through-hole 15b is formed on a right side of the through-hole 15a in the support member 15 so as to penetrate through the support member 15 in the upper and lower direction. A through-hole 23a is formed at a substantially center of the guide member 23 so as to penetrate through the guide member 23 in the upper and lower direction. The through-holes 15a and 23a are substantially identical in shape with each other, each of which is formed in a rectangular shape. The through-hole 15a and the through-hole 23a are overlapped with each other when viewed in the upper and lower direction. The through-hole 15b is formed in a rectangular shape and is larger than the through-hole 15a. It should be noted that the through-hole 15b is not shown in FIGS. 2(A), 3, and 4.

The support member 15 has a protruded part 15c that is protruded in the lower direction. In this embodiment, the support member 15 has four protruded parts 15c. Of the four protruded parts 15c, two protruded parts 15c are formed on a front end side of the support member 15, and the remaining two protruded parts 15c are formed on a rear end side of the support member 15. Further, the two protruded parts 15c formed on the front end side of the support member 15 are disposed in a separated state with a predetermined distance therebetween in the right and left direction. The two protruded parts 15c formed on the rear end side of the support member 15 are also disposed in a separated state with a predetermined distance therebetween in the right and left direction. Each of the protruded parts 15c in this embodiment is a first protruded part.

Each of the protruded parts 15c is formed in an isosceles trapezoidal block shape when viewed in the front and rear direction. A lower end face of each of the protruded parts 15c is formed in a flat face shape that is perpendicular to the upper and lower direction. A left side face of each of the protruded parts 15c is formed in a flat face-shaped inclined face that is inclined to the right direction toward the lower direction side. A right side face of each of the protruded parts 15c is formed in a flat face-shaped inclined face that is inclined to the left direction toward the lower direction side.

The presser roller 16 is rotatably supported by a fixed shaft 26. The fixed shaft 26 is disposed so that an axial direction of the fixed shaft 26 and the right and left direction are coincided with each other. The presser roller 16 is rotatably supported on a left end side of the rotation shaft 26. The presser roller 16 is rotatable with the right and left direction as an axial direction of rotation. A lower end-side portion of the presser roller 16 is disposed in the through-hole 23a. When the moving part 17 moves upward and downward, the lower end-side portion of the presser roller 16 passes through the through-hole 23a. A right end side of the fixed shaft 26 is fixed to a shaft holding member 27 that is fixed to an upper face of the support member 15.

The shaft holding member 27 is fixed to the right end side of the support member 15 so as to be protruded from the support member 15 toward the upper side.

The holding member 18 is formed in a substantially rectangular flat plate shape. The holding member 18 is disposed so that a thickness direction of the holding member 18 and the upper and lower direction are coincided with each other. The holding member 18 has a protruded part 18a that is protruded in the upper direction. In this embodiment, the holding member 18 has four protruded parts 18a. Of the four protruded parts 18a, two protruded parts 18a are formed on a front end side of the holding member 18, and the remaining two protruded parts 18a are formed on a rear end side of the holding member 18. Further, the two protruded parts 18a formed on the front end side of the holding member 18 are disposed in a separated state with a predetermined distance therebetween in the right and left direction. The two protruded parts 18a formed on the rear end side of the holding member 18 are also disposed in a separated state with a predetermined distance therebetween in the right and left direction. Each of the protruded parts 18a is formed in a rectangular block shape when viewed in the front and rear direction. An upper end face of each of the protruded parts 18a is formed in a flat face shape that is perpendicular to the upper and lower direction. The four protruded parts 18a are located at positions respectively corresponding to the four protruded parts 15c. When the holding member 18 is located at the hold position 18A, the upper end face of each protruded part 18a is abutted with the lower end face of the corresponding protruded part 15c. Each of the protruded parts 18a in this embodiment is a second protruded part.

The abutting member 19 is formed in a substantially rectangular flat plate shape. The abutting member 19 is disposed so that a thickness direction of the abutting member 19 and the right and left direction are coincided with each other. The abutting member 19 is fixed to a right end side of the holding member 18 and is protruded from the right end of the holding member 18 in the upper direction. Alternatively, the abutting member 19 is formed integrally with the holding member 18 and is protruded from the right end of the holding member 18 in the upper direction.

The urging member 20 is, for example, a compression coil spring. In the following descriptions, accordingly, the urging member 20 is referred to as a "compression coil spring 20". A left end of the compression coil spring 20 is abutted with a right face of the abutting member 19.

The drive source 21 is a solenoid. In the following descriptions, accordingly, the drive source 21 is referred to as a "solenoid 21". The solenoid 21 is disposed on, for example, an upper side of the moving part 17.

A main body 21a of the solenoid 21 is fixed to a frame of the card insertion part 4. A lower end of a plunger 21b of the solenoid 21 is mounted to the moving part 17. Further, the solenoid 21 is disposed so that the plunger 21b is movable in the upper and lower direction. The plunger 21b is inserted through the compression coil spring 28. The moving part 17 is urged by the compression coil spring 28 in the lower direction. In this embodiment, when the solenoid 21 is electrified, the plunger 21b moves toward the upper side (in other words, moves toward an inside of the main body 21a), thereby moving the moving part 17 in the upper direction. In other words, the solenoid 21 is coupled to the moving part 17 to move the moving part 17 in the upper direction. The compression coil spring 28 in this embodiment is a second urging member.

The drive roller 22 is fixed to a rotation shaft 29. The rotation shaft 29 is disposed so that an axial direction of the rotation shaft 29 and the right and left direction are coincided with each other. Further, the rotation shaft 29 is rotatably supported by the frame of the card insertion part 4. The rotation shaft 29 is coupled to a motor 30. The drive roller 22 is fixed to a left end side of the rotation shaft 29 and is rotatable with the right and left direction as an axial direction of rotation. An upper end-side portion of the drive roller 22 is disposed in the through-hole 15a. When the moving part 17 moves upward and downward, the upper end-side portion of the drive roller 22 passes through the through-hole 15a.

As shown in FIG. 2(A), in a standby state before the card 2 is inserted into the card insertion port 3, the abutting member 19 and the holding member 18 are urged in the left direction by an urging force of the compression coil spring 20, and the holding member 18 is located at the hold position 18A. At this time, the upper end face of each protruded part 18a of the holding member 18 is abutted with the lower end face of the corresponding protruded part 15c of the support member 15, and the moving part 17 is located at the insertable and ejectable position 17A. In this state, when the card 2 which has been inserted through the card insertion port 3 and of which the tip end (right end) has been abutted with a left face of the abutting member 19 is further inserted, the holding member 18 slides together with the abutting member 19 from the hold position 18A to the retreated position 18B, and the moving part 17 moves from the insertable and ejectable position 17A to the insertion completion position 17B (see FIGS. 3 and 4).

In other words, when the card 2 which has been inserted through the card insertion port 3 and has been abutted with the abutting member 19 is further inserted, the holding member 18 located at the hold position 18A moves together with the abutting member 19 in the right direction and slides to the retreated position 18B. When the holding member 18 slides to the retreated position 18B, the abutment state of the upper end face of each protruded part 18a with the lower end face of the corresponding protruded part 15c is released. The moving part 17 located at the insertable and ejectable position 17A moves downward by the urging force of the compression coil spring 28 and the gravity to move to the insertion completion position 17B. When the moving part 17 moves to the insertion completion position 17B, as shown in FIG. 4, the card 2 is sandwiched between the presser roller 16 and the drive roller 22. Further, when the moving part 17 moves to the insertion completion position 17B, a left side face of each protruded part 18a is contacted with the right side face of the corresponding protruded part 15c by the urging force of the compression coil spring 20. The movement of the holding member 18 and abutting member 19 in the left direction is restricted by the contact of the left side face of each protruded part 18a with the right side face of the corresponding protruded part 15c.

Thereafter, the card 2 is conveyed in the front and rear direction between the card insertion part 4 and the main body part 5 by the presser roller 16 and the drive roller 22 each disposed in the inside of the card insertion part 4 and the card conveying mechanism 7 disposed in the inside of the main body part 5. Further, in the inside of the main body part 5, the card conveying mechanism 7 conveys the card 2 in the front and rear direction, and the magnetic head 6 performs reading and recording of magnetic data.

In ejecting the card 2 from the card processing device 1 after completion of the processing for the card 2 in the card processing device 1, first, the card 2 is conveyed to the card insertion part 4. Thereafter, the solenoid 21 is electrified to move the moving part 17 upward. In other words, in ejecting the card 2, the moving part 17 moves from the insertion completion position 17B to the insertable and ejectable position 17A by the power of the solenoid 21. When the moving part 17 moves upward to the insertable and ejectable position 17A, the support member 15 lifts the card 2. Further, when the moving part 17 moves upward to the insertable and ejectable position 17A, the contact state of the right side face of each protruded part 15c with the left side face of the corresponding protruded part 18a is released. The holding member 18 located at the retreated position 18B then moves in the left direction by the urging force of the compression coil spring 20 and slides to the hold position 18A. At this time, the abutting member 19 moves together with the holding member 18 in the left direction to eject the card 2 from the card insertion port 3. In other words, the card 2 is pushed by the abutting member 19 in the left direction and is ejected from the card insertion port 3.

### (Principal Effects in this Embodiment)

As described above, in this embodiment, when the card 2 which has been inserted through the card insertion port 3 and has been abutted with the abutting member 19 is further inserted, the holding member 18 slides from the hold position 18A to the retreated position 18B, and the moving part 17 moves from the insertable and ejectable position 17A to the insertion completion position 17B.

In other words, in this embodiment, when the card 2 which has been inserted through the card insertion port 3 and has been abutted with the abutting member 19 is further inserted, the moving part 17 moves to the insertion completion position 17B located on the lower side relative to the insertable and ejectable position 17A, and the presser roller 16 presses the upper face of the card 2. In this embodiment, therefore, a favorable feeling that the card 2 has been completely inserted can be given to a user.

In this embodiment, in ejecting the card 2, the moving part 17 moves upward from the insertion completion position 17B to the insertable and ejectable position 17A by the power of the solenoid 21, and the abutting member 19 moves together with the holding member 18 located at the retreated position 18B, in the left direction by the urging force of the compression coil spring 20, so that the card 2 is ejected from the card insertion port 3. In this embodiment, accordingly, the card 2 can be automatically ejected even when the moving part 17 moves to the insertion completion position 17B located on the lower side relative to the insertable and ejectable position 17A in inserting the card 2, in order to give to a user a favorable feeling that the card 2 has been completely inserted.

In this embodiment, the card 2 is inserted into the card insertion port 3 so that the short widthwise direction of the card 2 and the right and left direction are coincided with each other. In this embodiment, it is therefore possible to prevent skimming that a criminal attaches a magnetic head to the card insertion port 3 to illegally acquire magnetic data in the card 2 with this magnetic head. In this embodiment, further, the width of the card insertion part 4 in the right and left direction is narrower than the width in the longitudinal direction of the card 2. Therefore, the card 2 is not taken into the card insertion part 4 even when the card 2 is inserted into the card insertion port 3 so that the longitudinal direction of the card 2 and the right and left direction are coincided with each other. In this embodiment, accordingly, the card 2 can be prevented from being erroneously inserted, for example, the card 2 can be prevented from being inserted into the card insertion port 3 so that the longitudinal direction of the card 2 and the right and left direction are coincided with each other.

In this embodiment, the card 2 is conveyed in the front and rear direction in the inside of the card processing device 1 with the longitudinal direction of the card 2 and the front and rear direction coincided with each other. In this embodiment, therefore, reading and recording of magnetic data using the magnetic head 6 can be performed even when the card processing device 1 is not provided with a head moving mechanism structured to move the magnetic head 6 in the front and rear direction. In this embodiment, accordingly, the structure of the card processing device 1 can be simplified.

### (Modification of Card Insertion Part)

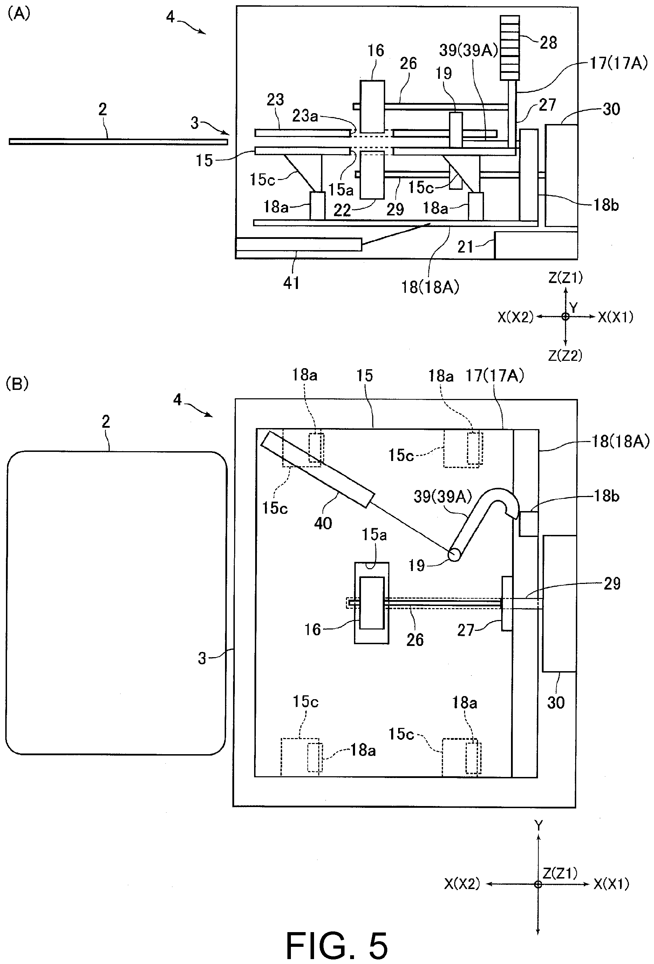

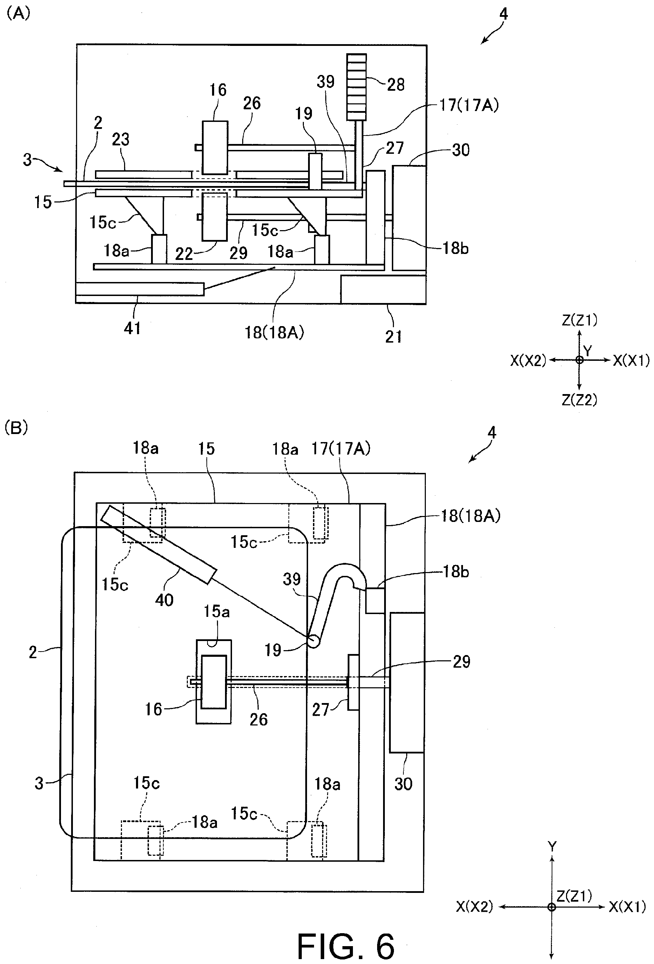

FIG. 5 shows a card insertion part 4 in accordance with another embodiment of the present invention, wherein (A) is a front view, and (B) is a plan view. FIGS. 6, 7 and 8 show an operation of the card insertion part 4 shown in FIG. 5, wherein (A) is an explanatory front view, and (B) is explanatory plan view.

In the embodiment described above, the abutting member 19 is fixed to the holding member 18 or is formed integrally with the holding member 18. In addition, as shown in FIGS. 5 to 8, for example, a lock member 39 may be provided for locking the holding member 18 at the hold position 18A, and the abutting member 19 may be fixed to the lock member 39 or may be formed integrally with the lock member 39. A structure and operations of the card insertion part 4 according to this modification will be described below. In the following descriptions, similar structures to those in the embodiment described above are referred with the same reference signs and their descriptions are omitted or simplified.

Similarly to the embodiment described above, the card insertion part 4 includes the moving part 17, the holding member 18, the abutting member 19, the solenoid 21, the drive roller 22, and the like. The card insertion part 4 according to the modification also includes the lock member 39, a tension coil spring 40 serving as a first urging member that urges the abutting member 19 in the left direction, and a tension coil spring 41 serving as a third urging member that urges the holding member 18 in the left direction. It should be noted that the tension coil spring 40 is not shown in FIGS. 5(A), 6(A), 7(A), and 8(A). Further, the solenoid 21, the guide member 23, the compression coil spring 28, and the tension coil spring 41 are not shown in FIGS. 5(B), 6(B), 7(B), and 8(B).

Each of the protruded parts 15c of the support member 15 is formed in a trapezoidal block shape when viewed in the front and rear direction. The lower end face of each of the protruded parts 15c is formed in a flat face shape that is perpendicular to the upper and lower direction. The left side face of each of the protruded parts 15c is formed in a flat face-shaped inclined face that is inclined to the right direction toward the lower direction side. Each of the protruded parts 15c is inclined at a relatively gentle angle. The right side face of each of the protruded parts 15c is formed in a flat face shape that is perpendicular to the right and left direction.

A contact portion 18b that contacts with the lock member 39 is formed on a right end side of the holding member 18 so as to be protruded in the upper direction.

The lock member 39 is formed in a flat plate shape. The lock member 39 is formed in, for example, a substantially "J" shape when viewed in the upper and lower direction. The lock member 39 is turnably supported on the frame of the card insertion part 4. The lock member 39 is turnable with the upper and lower direction as an axial direction of turning. The abutting member 19 is formed in a long and thin circular columnar shape. The abutting member 19 is disposed so that the axial direction of the abutting member 19 and the upper and lower direction are coincided with each other. Further, as described above, the abutting member 19 is fixed to the lock member 39 or is formed integrally with the lock member 39. Specifically, the abutting member 19 is fixed to one end side of the lock member 39 that is formed in a substantially "J" shape when viewed in the upper and lower direction, or is formed on one end side of the lock member 39.

One end side (right end side) of the tension coil spring 40 is mounted to the abutting member 19 and the other end side (left end side) of the tension coil spring 40 is fixed to a left end-side portion of the frame of the card insertion part 4. The tension coil spring 40 urges the abutting member 19 in the left direction. The tension coil spring 40 also urges the lock member 39 toward a lock position 39A (a position shown in FIG. 5(B)) where the lock member 39 locks the holding member 18. In other words, the tension coil spring 40 urges the lock member 39 toward the lock position 39A where the other end-side portion of the lock member 39 is contacted with a left side face of the contact portion 18b of the holding member 18 to restrict the movement of the holding member 18 in the left direction. In this modification, the tension coil spring 40 urges the lock member 39 in a clockwise direction in FIGS. 5 to 8.

The solenoid 21 is disposed on, for example, a lower side of the holding member 18. The main body of the solenoid 21 is fixed to the frame of the card insertion part 4, and the plunger of the solenoid 21 is mounted to the holding member 18. In other words, the solenoid 21 is coupled to the holding member 18. Further, the solenoid 21 is disposed so that the plunger is movable in the right and left direction. In this modification, when the solenoid 21 is electrified, the plunger moves to the right side, thereby sliding the holding member 18 in the right direction.

The compression coil spring 28 is disposed on the upper side of the moving part 17 and urges the moving part 17 in the lower direction. One end side (right end side) of the tension coil spring 41 is mounted to the holding member 18 and the other end side (left end side) of the tension coil spring 41 is fixed to the left end-side portion of the frame of the card insertion part 4. The tension coil spring 41 urges the holding member 18 in the left direction.

As shown in FIG. 5, in the standby state before the card 2 is inserted into the card insertion port 3, the lock member 39 is urged toward the lock position 39A by an urging force of the tension coil spring 40, and the holding member 18 is locked at the hold position 18A by the lock member 39.

In other words, the holding member 18 is located at the hold position 18A in the standby state. At this time, the upper end face of each protruded part 18a of the holding member 18 is abutted with the lower end face of the corresponding protruded part 15c of the support member 15, and the moving part 17 is located at the insertable and ejectable position 17A. In this state, when the card 2 which has been inserted through the card insertion port 3 and of which the tip end (right end) has been abutted with the abutting member 19 is further inserted, the locked state of the holding member 18 by the lock member 39 is released, so that the holding member 18 located at the hold position 18A moves in the left direction and slides to the retreated position 18B, and the moving part 17 moves from the insertable and ejectable position 17A to the insertion completion position 17B (see FIGS. 6 to 8).

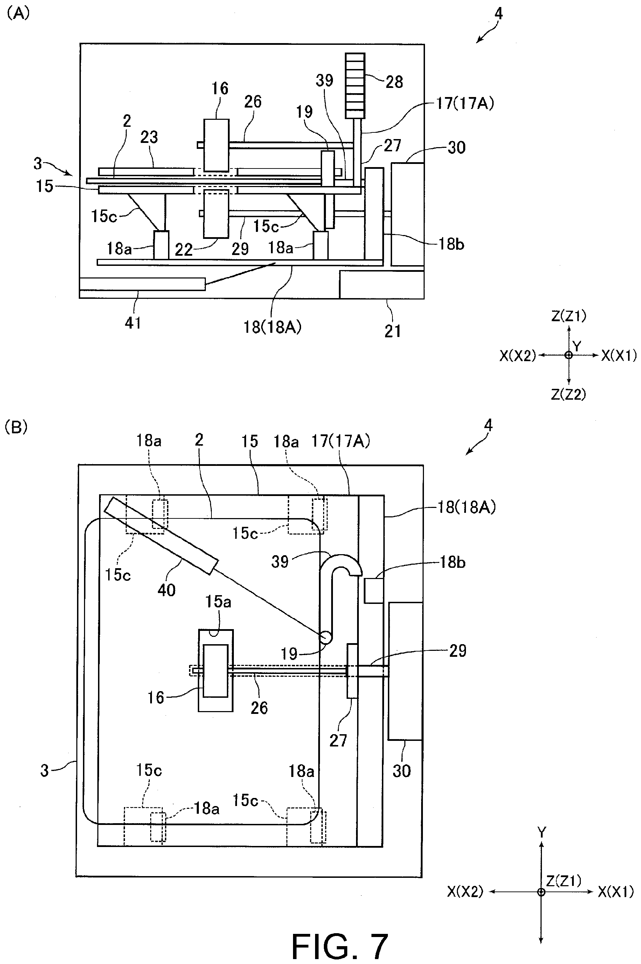

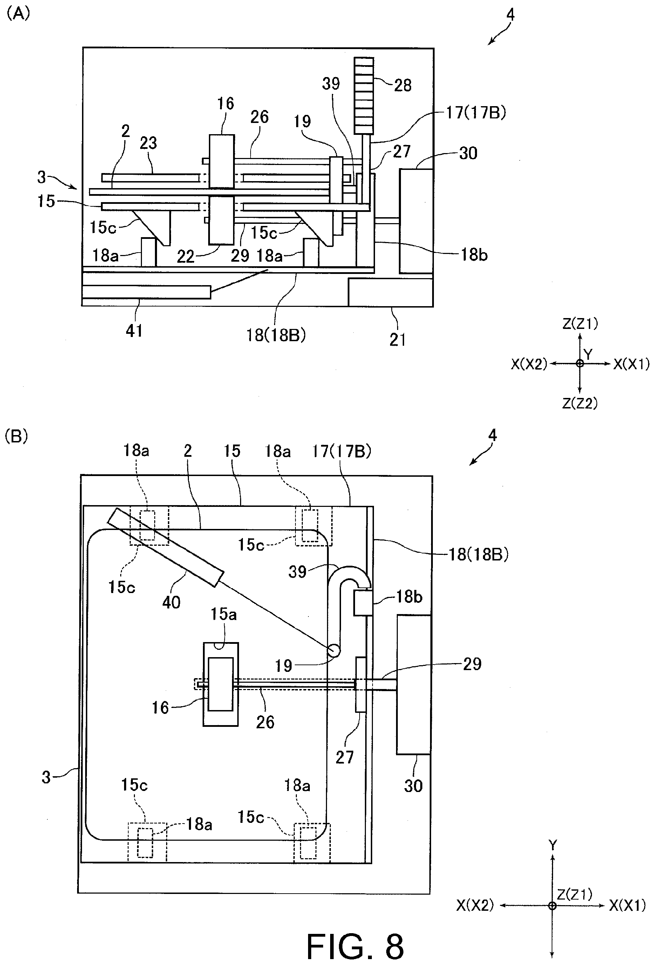

In other words, when the card 2 which has been inserted through the card insertion port 3 and has been abutted with the abutting member 19 is further inserted, as shown in FIG. 6(B), the lock member 39 is turned in a direction separated from the contact portion 18b of the holding member 18 (in other words, is turned in a counterclockwise direction in FIGS. 5 to 8). Thereafter, as shown in FIG. 7(B), the contact state of the contact portion 18b with the lock member 39 is released. When the contact state of the contact portion 18b with the lock member 39 is released, as shown in FIG. 8, the holding member 18 located at the hold position 18A moves in the left direction and slides to the retreated position 18B by the urging force of the tension coil spring 41. When the holding member 18 slides to the retreated position 18B, the abutment state of the upper end face of each protruded part 18a with the lower end face of the corresponding protruded part 15c is released. The moving part 17 located at the insertable and ejectable position 17A moves downward by the urging force of the compression coil spring 28 and the gravity to move to the insertion completion position 17B. When the moving part 17 moves to the insertion completion position 17B, the card 2 is sandwiched between the presser roller 16 and the drive roller 22 as shown in FIG. 8(A). When the holding member 18 is located at the retreated position 18B, the contact portion 18b restricts the turning of the lock member 39 in the clockwise direction as shown in FIG. 8(B).

Similarly to the embodiment described above, thereafter, the card 2 is conveyed between the card insertion part 4 and the main body part 5 by the presser roller 16, the drive roller 22, and the card conveying mechanism 7. In the inside of the main body part 5, the card conveying mechanism 7 conveys the card 2, and the magnetic head 6 performs reading and recording of magnetic data.

In ejecting the card 2 from the card processing device 1 after completion of the processing for the card 2 in the card processing device 1, first, the card 2 is conveyed to the card insertion part 4. Thereafter, the solenoid 21 is electrified to slide the holding member 18 in the right direction. In other words, in ejecting the card 2, the holding member 18 slides from the retreated position 18B to the hold position 18A by the power of the solenoid 21. When the holding member 18 slides from the retreated position 18B to the hold position 18A, each protruded part 18a moves in the right direction while being contacted with the inclined face formed on the left side face of the corresponding protruded part 15c. Therefore, the moving part 17 is lifted to move from the insertion completion position 17B to the insertable and ejectable position 17A. When the moving part 17 moves upward to the insertable and ejectable position 17A, the support member 15 lifts the card 2. Further, the holding member 18 slides to the hold position 18A to release the restriction of the turning of the lock member 39 by the contact portion 18b. Therefore, the abutting member 19 moves in the left direction by the urging force of the tension coil spring 40, so that the card 2 is ejected from the card insertion port 3. In other words, the abutting member 19 pushes the card 2 in the left direction, so that the card 2 is ejected from the card insertion port 3.

This modification can also produce similar advantageous effects to those of the embodiment described above. The structure that the solenoid 21 is coupled to the moving part 17 to directly move the moving part 17 upward in the embodiment described above allows the moving part 17 to surely move upward as compared with the structure in this modification.

### (Other Embodiments)

Described above is an example of a preferred embodiment according to the present invention. However, the present invention is not limited to the above embodiment and various variations and modifications may be made without changing the concept of the present invention.

In the embodiment described above, the motor 12 for driving the drive rollers of the conveying roller pairs 10 is provided separately from the motor 30 for driving the drive roller 22. Alternatively, a common motor may be used for driving both the drive rollers of the conveying roller pairs 10 and the drive roller 22. For example, the motor 12 may be structured to drive the drive rollers of the conveying roller pairs 10 and the drive roller 22. In this case, the rotation shaft 29 is coupled to the motor 12 via a power transmission mechanism including pulleys, a belt, and the like.

In the embodiment described above, the card conveying mechanism 7 includes the plurality of conveying roller pairs 10. Alternatively, the card conveying mechanism 7 may include a plurality of pulleys for conveying the card 2 and a belt to be stretched over the pulleys, instead of the plurality of conveying roller pairs 10. Also in the embodiment described above, the drive roller 22 may be replaced with a plurality of pulleys for conveying the card 2 and a belt to be stretched over the pulleys.

In the embodiment described above, the card insertion part 4 and the main body part 5 are disposed so as to be adjacent to each other in the front and rear direction. Alternatively, the card insertion part 4 and the main body part 5 may be disposed so as to be adjacent to each other in the right and left direction. In this case, the card 2 is conveyed in the right and left direction in the inside of the card processing device 1 with the short widthwise direction of the card 2 and the right and left direction coincided with each other. Also in this case, the plurality of conveying roller pairs 10, the presser roller 16, and the drive roller 22 rotate with the front and rear direction as an axial direction of rotation so as to convey the card 2 in the right and left direction.

In the embodiment described above, the card 2 is inserted into the card insertion port 3 so that the short widthwise direction of the card 2 and the right and left direction are coincided with each other. Alternatively, the card 2 may be inserted into the card insertion port 3 so that the longitudinal direction of the card 2 and the right and left direction are coincided with each other. In this case, for example, the card 2 is conveyed in the front and rear direction in the inside of the card processing device 1 with the short widthwise direction of the card 2 and the front and rear direction coincided with each other. Also in this case, the card insertion part 4 and the main body part 5 may be disposed so as to be adjacent to each other in the right and left direction. In this case, the card 2 is conveyed in the right and left direction in the inside of the card processing device 1 with the longitudinal direction of the card 2 and the right and left direction coincided with each other.

In the embodiment described above, the card processing device 1 includes the main body part 5. Alternatively, the card processing device 1 does not necessarily include the main body part 5. In this case, the card insertion part 4 includes the magnetic head 6. Also in this case, the presser roller 16 does not necessarily serve as the presser member that presses the upper face of the card 2 inserted through the card insertion port 3. For example, the presser member may be a block-shaped member. Also in this case, the card insertion part 4 does not necessarily include the drive roller 22 or may include a block-shaped member rather than the drive roller 22.

In other words, the card processing device 1 in this case may be of a manually operated type which is not provided with a mechanism for conveying the card 2.

In the embodiment described above, the compression coil spring 20 or the tension coil spring 40 serves as the first urging member that urges the abutting member 19. Alternatively, the first urging member may be any spring member such as a leaf spring. Likewise, in the embodiment described above, the compression coil spring 28 serves as the second urging member that urges the moving part 17 in the lower direction. Alternatively, the second urging member may be any spring member such as a tension coil spring or a leaf spring. Further, in the modification shown in FIGS. 5 to 8, the tension coil spring 41 serves as the third urging member that urges the holding member 18 in the left direction. Alternatively, the third urging member may be any spring member such as a compression coil spring or a leaf spring. In the embodiment described above, the solenoid 21 serves as the drive source that moves the moving part 17 from the insertion completion position 17B to the insertable and ejectable position 17A. Alternatively, a motor may be employed as the drive source that moves the moving part 17 from the insertion completion position 17B to the insertable and ejectable position 17A.

In the embodiment described above, the card processing device 1 is mounted so that the "Z" direction (upper and lower direction) is coincided with the vertical direction (direction of gravity). Alternatively, the card processing device 1 may be mounted so that the "X" direction (right and left direction) or the "Y" direction (front and rear direction) is coincided with the vertical direction (direction of gravity). Also in the embodiment described above, if the front face of the card 2 is formed with an external connection terminal of an IC chip, the card processing device 1 may include an IC contact block in addition to or in place of the magnetic head 6.

### REFERENCE SIGNS LIST

1: card processing device
2: card
2a: magnetic stripe
3: card insertion port
4: card insertion part
5: main body part
6: magnetic head
7: card conveying mechanism
15: support member
15c: protruded part (first protruded part)
16: presser roller (presser member, second roller)
17: moving part
17A: insertable and ejectable position
17B: insertion completion position
18: holding member
18A: hold position
18B: retreated position
18a: protruded part (second protruded part)
19: abutting member
20: compression coil spring (first urging member)
21: solenoid (drive source)
22: drive roller (first roller)
28: compression coil spring (second urging member)
39: lock member
39A: lock position
40: tension coil spring (first urging member)
41: tension coil spring (third urging member)
XI: inserting direction of card
X2: ejecting direction of card
Y: perpendicular direction
Z: thickness direction of card
Z1: second direction
Z2: first direction

## Claims

1. A card processing device provided with a card insertion port through which a card is inserted into and ejected from the card processing device,
wherein one side in a thickness direction of the card inserted through the card insertion port is referred to as a first direction, and the other side in the thickness direction of the card is referred to as a second direction,
the card processing device comprising:
a moving part that includes:
a support member disposed on a first direction side of the card inserted through the card insertion port and structured to be contactable with the card from the first direction side, anda presser member structured to press a second direction-side face of the card inserted through the card insertion port,
wherein the moving part being movable in the thickness direction of the card between an insertable and ejectable position and an insertion completion position,
the insertable and ejectable position is where the presser member is disposed on a second direction side relative to the card inserted through the card insertion port, so that the card becomes insertable into and ejectable from the card insertion port, and
the insertion completion position is where the presser member is contactable with the second direction-side face of the card to press the second direction-side face of the card and which is located on the first direction side relative to the insertable and ejectable position;
a holding member that is slidable in an inserting direction of the card and an ejecting direction of the card between a hold position where the holding member holds the moving part located at the insertable and ejectable position and a retreated position where the holding member is retreated so that the moving part becomes movable to the insertion completion position;
an abutting member with which a tip end of the card inserted through the card insertion port is abutted;
a first urging member that urges the abutting member in the ejecting direction of the card;
a second urging member that urges the moving part in the first direction; and
a drive source that moves the moving part from the insertion completion position to the insertable and ejectable position,
wherein
in inserting the card, when the card which has been inserted through the card insertion port and has been abutted with the abutting member is further inserted, the holding member slides from the hold position to the retreated position, and the moving part moves from the insertable and ejectable position to the insertion completion position, and
in ejecting the card, the moving part moves from the insertion completion position to the insertable and ejectable position by power of the drive source, and the abutting member pushes the card in the ejecting direction of the card, so that the card is ejected from the card insertion port.

2. The card processing device according to claim 1, wherein
the abutting member is fixed to the holding member or is formed integrally with the holding member, and
in inserting the card, when the card which has been inserted through the card insertion port and has been abutted with the abutting member is further inserted, the holding member moves together with the abutting member in the inserting direction of the card and slides to the retreated position.

3. The card processing device according to claim 2, wherein
the support member has a first protruded part that is protruded in the first direction,
the holding member has a second protruded part that is protruded in the second direction and is abutted with a first direction-side end of the first protruded part at the hold position, and
in inserting the card, when the card which has been inserted through the card insertion port and has been abutted with the abutting member is further inserted, the holding member moves in the inserting direction of the card to release an abutment state of the second protruded part with the first protruded part, so that the moving part moves from the insertable and ejectable position to the insertion completion position.

4. The card processing device according to claim 2 or 3, wherein
the drive source is coupled to the moving part to move the moving part in the second direction.

5. The card processing device according to claim 1, further comprising:
a lock member that locks the holding member at the hold position; and
a third urging member that urges the holding member in the ejecting direction of the card,
wherein
the abutting member is fixed to the lock member or is formed integrally with the lock member,
the first urging member urges the lock member toward a lock position where the lock member locks the holding member, and
in inserting the card, when the card which has been inserted through the card insertion port and has been abutted with the abutting member is further inserted, a locked state of the holding member by the lock member is released, so that the holding member moves in the ejecting direction of the card and slides to the retreated position.

6. The card processing device according to claim 5, wherein
the support member has a first protruded part that is protruded in the first direction,
the holding member has a second protruded part that is protruded in the second direction and is abutted with a first direction-side end of the first protruded part at the hold position, and
in inserting the card, when the card which has been inserted through the card insertion port and has been abutted with the abutting member is further inserted, the locked state of the holding member by the lock member is released, so that the holding member moves in the ejecting direction of the card, and an abutment state of the second protruded part with the first protruded part is released, so that the moving part moves from the insertable and ejectable position to the insertion completion position.

7. The card processing device according to claim 6, wherein
the first protruded part has a face on an ejecting direction side of the card, the face being an inclined face that is inclined to the inserting direction of the card toward the first direction side, and
the drive source is coupled to the holding member to slide the holding member in the inserting direction of the card.

8. The card processing device according to any one of claims 1 to 7, further comprising:
a magnetic head that performs at least one of reading of magnetic data recorded in the card and recording of magnetic data to the card,
wherein
the card is formed in a substantially rectangular shape,
the card has a magnetic stripe to which magnetic data are recorded and which is formed in a strip shape along a longitudinal direction of the card, and
the card is inserted into the card insertion port so that a short widthwise direction of the card and the inserting direction of the card are coincided with each other.

9. The card processing device according to claim 8, further comprising:
a card insertion part that has the card insertion port and includes the moving part, the holding member, and the abutting member; and
a main body part that includes the magnetic head,
wherein
the card insertion part and the main body part are disposed so as to be adjacent to each other in a perpendicular direction being perpendicular to the thickness direction of the card and the inserting direction of the card,
the main body part includes a card conveying mechanism that conveys the card in an inside of the main body part,
the card insertion part includes a first roller that is contacted with a first direction-side face of the card when the moving part is located at the insertion completion position,
the presser member is a second roller that is contacted with the second direction-side face of the card when the moving part is located at the insertion completion position, and
the card is conveyed in the perpendicular direction between the card insertion part and the main body part by the card conveying mechanism, the first roller, and the second roller.
